# EUROPEAN PATENT SPECIFICATION

(11) **EP 3 412 057 B1**
(45) Date of publication and mention of the grant of the patent: **06.11.2019**
(21) Application number: 16831683.4
(22) Date of filing: 28.12.2016
(51) Int. Cl.: H04W 76/11, H04W 12/04, H04W 80/02, H04L 29/06

(54) **PACKET DATA CONVERGENCE PROTOCOL (PDCP) OPERATION IN A TRANSPARENT MODE**
BETRIEB EINES PAKETDATENKONVERGENZPROTOKOLLS (PDCP) IN EINEM TRANSPARENTEN MODUS
OPÉRATION DE PROTOCOLE DE CONVERGENCE DE DONNÉES DE PAQUET (PDCP) DANS UN MODE TRANSPARENT

(30) Priority: 05.02.2016 US 201662292114 P
(43) Date of publication of application: 12.12.2018
(73) Proprietor: Intel Corporation, Santa Clara, CA 95054 (US)
(72) Inventor: BURBIDGE, Richard, Shrivenham Oxfordshire SN6 8HR (GB); PALAT, Sudeep, Cheltenham Gloucestershire GL51 0GG (GB); MARTINEZ TARRADELL, Marta, Hillsboro Oregon 97124 (US); BANGOLAE, Sangeetha, Houston Texas 77043 (US)
(74) Representative: Goddar, Heinz J.
(86) International application number: PCT/US2016/068988
(87) International publication number: WO 2017/136071

(56) References cited:
- QUALCOMM INCORPORATED: "NB-IoT PDCP transparent mode for data via MME", 3GPP DRAFT; R2-160482 - PDCP TRANSPARENT MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Budapest, HU; 20160119 - 20160121 12 January 2016 (2016-01-12), XP051066415, Retrieved from the Internet: URL:http://www.3gpp.org/ftp/tsg_ran/WG2_RL 2/TSGR2_AHs/2016_01_LTE_NB_IoT/Docs/ [retrieved on 2016-01-12]
- ERICSSON: "Security aspects of NB-IoT", 3GPP DRAFT; R2-160476 - SECURITY ASPECTS OF NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Budapest, HU; 20160119 - 20160121 18 January 2016 (2016-01-18), XP051054763, Retrieved from the Internet: URL:http://www.3gpp.org/ftp/Meetings_3GPP_ SYNC/RAN2/Docs/ [retrieved on 2016-01-18]

## Description

### BACKGROUND

Wireless mobile communication technology uses various standards and protocols to transmit data between a node (e.g., a transmission station) and a wireless device (e.g., a mobile device). Some wireless devices communicate using orthogonal frequency-division multiple access (OFDMA) in a downlink (DL) transmission and single carrier frequency division multiple access (SC-FDMA) in uplink (UL). Standards and protocols that use orthogonal frequency-division multiplexing (OFDM) for signal transmission include the third generation partnership project (3GPP) long term evolution (LTE) Release 8, 9, 10, 11, 12 and 13, the Institute of Electrical and Electronics Engineers (IEEE) 802.16 standard (e.g., 802.16e, 802.16m), which is commonly known to industry groups as WiMAX (Worldwide interoperability for Microwave Access), and the IEEE 802.11 standard, which is commonly known to industry groups as WiFi.

In 3GPP radio access network (RAN) LTE systems (e.g., Release 13 and earlier), the node can be a combination of Evolved Universal Terrestrial Radio Access Network (EUTRAN) Node Bs (also commonly denoted as evolved Node Bs, enhanced Node Bs, eNodeBs, or eNBs) and Radio Network Controllers (RNCs), which communicates with the wireless device, known as a user equipment (UE). The downlink (DL) transmission can be a communication from the node (e.g., eNodeB) to the wireless device (e.g., UE), and the uplink (UL) transmission can be a communication from the wireless device to the node.

3GPP Tdoc. R2-160482, "NB-IoT PDCP transparent mode for data via MME", TSG RAN WG2 NB-IoT Ad-hoc Meeting, 19-21 January 2016, proposes a PDCP transparent mode and identifies requirements on other layers of the UE protocol in an attempt to minimise access stratum protocol overhead for small data transfer.

### SUMMARY

The invention is defined by the independent claims. Advantageous embodiments are subject to the dependent claims.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a control plane protocol stack in accordance with an example;
FIG. 2 illustrates a signaling of a radio resource control (RRC) connection setup complete message from a user equipment (UE) and an eNodeB, and the RRC connection setup complete message includes a logical channel identifier (ID) to indicate that a packet data convergence protocol (PDCP) transparent mode (TM) is applied for a signaling radio bearer 1 (SRB1) in accordance with an example;
FIG. 3 illustrates signaling between an eNodeB and a user equipment (UE) for a reconfiguration of a signaling radio bearer (SRB) from a packet data convergence protocol (PDCP) transparent mode (TM) to a non-transparent PDCP in accordance with an example;
FIG. 4 depicts functionality of a narrowband Internet of Things (NB-IoT) user equipment (UE) operable to establish a radio resource control (RRC) connection with an eNodeB in accordance with an example;
FIG. 5 depicts functionality of an eNodeB operable to establish a radio resource control (RRC) connection with a user equipment (UE) in accordance with an example;
FIG. 6 depicts a flowchart of a machine readable storage medium having instructions embodied thereon for establishing a radio resource control (RRC) connection between a user equipment (UE) and an eNodeB in accordance with an example;
FIG. 7 illustrates a diagram of a wireless device (e.g., UE) and a base station (e.g., eNodeB) in accordance with an example; and
FIG. 8 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

### DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Narrow band Internet of Things (NB-IoT) is a technology standardized by the Third Generation Partnership Project (3GPP). NB-IoT includes a radio interface that has been designed to address specific cellular IoT (CIoT) constraints, such that NB-IoT can provide improved indoor coverage, support for a relatively large number of low throughput devices, low delay sensitivity, low device cost, low device power consumption and an improved network architecture. In NB-IoT, the radio interface and radio protocol layers can be based on LTE, but may not necessarily be fully backward compatible with LTE.

In one example, control plane protocols, specifically radio resource control (RRC) and non-access stratum (NAS) protocols, can be enhanced to enable small volumes of data to be carried over the control plane. The small volumes of data can be referred to as data carried over the control plane, or data carried over the NAS.

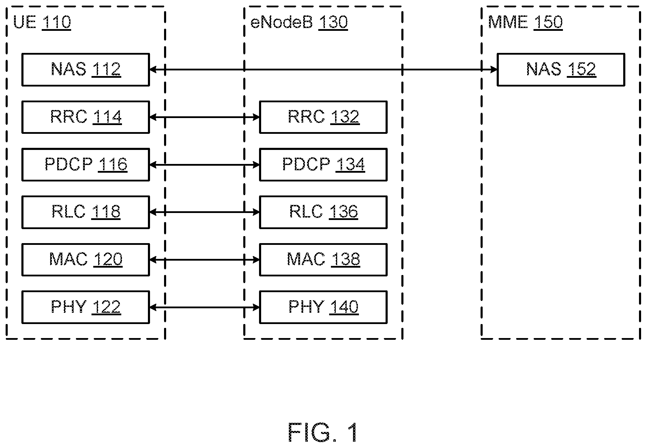

FIG. 1 illustrates a control plane protocol stack in accordance with a 3GPP Release 13 specification. A user equipment (UE) 110 can include the following layers described top down: a non-access stratum (NAS) layer 112, a radio resource control (RRC) layer 114, a packet data convergence protocol (PDCP) layer 116, a radio link control (RLC) layer 118, a medium access control (MAC) layer 120, and a physical (PHY) layer 122. An eNodeB 130 can include an RRC layer 132, a PDCP layer 134, an RLC layer 136, a MAC layer 138, and a PHY layer 140. In addition, a mobility management entity (MME) 150 can include a NAS layer 152.

In the UE 110, RRC messages can be routed through the PDCP layer 116 and the RLC layer 118 on a signaling radio bearer (SRB). More specifically, the RRC messages can be routed through the PDCP and RLC layers 116, 118 in the UE 110 on a signaling radio bearer 1 (SRB1). The PDCP layer 116 can provide access stratum (AS) security for the SRB1 by performing ciphering and integrity checking.

In previous solutions, for the SRB1, the PDCP layer can add a 1-byte header (e.g., 3 reserved bits and a 5 bit PDCP sequence number) and a 4-byte message authentication code (e.g., MAC-I) to an RRC packet data unit (PDU) to create a PDCP PDU. The 1-byte header and the 4-byte message authentication code can be present even before AS security is activated (in which case the MAC-I field is set to zeros). However, for data over the control plane for NB-IoT, access stratum security may not be essential (as the data is protected by NAS security which is applied within the NAS layers). Therefore, the 5-byte overhead (i.e., the header and message authentication code) added by the PDCP layer in the UE can be redundant.

In the present technology, to avoid the 5-byte overhead added by the PDCP layer, the PDCP layer in the UE can operate in a transparent mode (PDCP-TM) for the SRB1 when data is carried over the control plane for NB-IoT. When the UE operates in the PDCP transparent mode (or PDCP-TM), the PDCP layer in the UE can be bypassed when sending an RRC message from the UE to the eNodeB. For example, the UE can operate in accordance with the PDCP-TM for the SRB1 (i.e., the PDCP layer does not add the 5-byte overhead to an RRC message). Alternatively, the control plane protocol stack in the UE may not include a PDCP layer for the SRB1. In this case, the PDCP-TM can be referred to as a 'no PDCP entity'.

In one example, the PDCP-TM for data over the control plane can be applicable to NB-IoT. Alternatively, the PDCP-TM for data over the control plane can be applicable to enhanced machine type communication (eMTC) or standard LTE systems. In addition, the PDCP-TM can be applicable to data over NAS (i.e., the control plane), or short messaging service (SMS) messages that are sent over NAS.

In one example, the PDCP-TM for data over the control plane (which bypasses the PDCP layer in the UE) can be applicable for any signaling radio bearer (SRB). For example, in NB-IoT, SRB1 can be used, and in LTE (and eMTC), SRB1 and/or SRB2 can be used. In addition, other SRB(s) can be created that could be used when operating in the PDCP-TM.

In one configuration, although the PDCP-TM can provide a reduction in overhead, the PDCP-TM may not be applicable for the UE in all cases. For example, the PDCP-TM can be used by the UE when data is to be carried over NAS (i.e., the control plane). However, the PDCP-TM may not be used by the UE when access stratum (AS) security is compulsory, which is the case when data is carried over the user plane. Therefore, depending on whether data is carried over the control plane (e.g., NAS) or the user plane, PDCP-TM can be utilized by the UE or not utilized by the UE, respectively. In one example, it is vital that the UE and the eNodeB are aligned with respect to whether the PDCP-TM is applied at the UE or not applied at the UE. Otherwise, the UE and the eNodeB may not be able to correctly decode RRC messages received on the SRB1. As discussed in further detail below, the UE and the eNodeB can be aligned as to whether or not the UE applies the PDCP-TM by using a logical channel identifier (ID), which indicates whether or not the PDCP-TM is applied for the SRB1 with respect to a particular RRC message.

In one configuration, the UE can bypass the PDCP layer for all RRC messages until the AS security is established. In this configuration, upon establishing the AS security, the PDCP layer is not bypassed and this is independent of whether data is sent over the control plane (over NAS) or over the user plane. In other words, the usage of SRB1 and SRB1bis can depend on the establishment of AS security and irrespective of whether data is or not sent over the control plane or user plane. In this configuration, after the AS security is established, the SRB1 can be used (i.e., non-PDCP-TM or PDCP), and at this point, the data can be sent over the user plane or the data plane depending on its data routing path.

In one configuration, when the UE is establishing an RRC connection with the eNodeB, the UE can send an RRC connection request message to the eNodeB. The eNodeB can send an RRC connection setup message to the UE. The RRC connection request message and the RRC connection setup message can be sent over SRB0. The UE can send an RRC connection setup complete message to the eNodeB. The RRC connection setup complete message can be sent using PDCP-TM. The RRC connection setup complete message can include an initial NAS message, which can carry a small data packet. Along with the RRC connection setup complete message, the UE can use a specific logical channel ID to indicate to the eNodeB (or network) that the PDCP-TM is applied for the SRB1 for a particular RRC message. In addition, the specific logical channel ID can be used to indicate that the PDCP-TM is applied for the SRB1 with respect to subsequent RRC messages in both an uplink and a downlink. Alternatively, the specific logical channel ID can indicate that a different SRB (e.g., SRB1bis or SRB3) that uses the PDCP-TM is used to carry the RRC message.

In previous solutions, such as for example discussed in Tdoc. R2-160482, an RRC connection request message sent from the UE to the eNodeB can include an indicator, and the indicator can inform the eNodeB as to whether the PDCP-TM is to be used for the SRB1 for that particular RRC connection. In contrast, in the present technology, additional information is not added to the RRC connection request message, which is a size critical message. Rather, the RRC connection setup complete message can include a logical channel ID to indicate whether the PDCP-TM is applied for the SRB1 for a particular RRC message. In addition, the present technology can enable a reconfiguration between usage of the PDCP-TM on the SRB1 at the UE and usage of a non-transparent PDCP layer at the UE.

In one configuration, the UE can transmit an RRC connection setup complete message on the SRB1 to the eNodeB. The RRC connection setup complete message can carry an initial NAS message, and the NAS message can include data. The RRC connection setup complete message can be referred to as 'message 5'. The UE is to know, prior to transmitting the RRC connection setup complete message, whether the PDCP-TM is to be used on the SRB1. In addition, the eNodeB is to know, prior to attempting to decode a PDCP PDU that was received in the RRC connection setup complete message, whether the PDCP-TM has been used for its transmission. As described below, there are several mechanisms for the UE and the eNodeB to synchronize as to whether the PDCP-TM is applied for the SRB1.

In previous solutions, an RRC connection request message can include an indicator that indicates whether the PDCP-TM is applied for the SRB1. The RRC connection request message can be referred to as 'message 3'. In other words, a UE using data over NAS can include the indicator within the RRC connection request message, which can inform the eNodeB (or network) that PDCP-TM is to be used on the SRB1.
The inclusion of the indicator in the RRC connection request message also implicitly informs the eNodeB that the UE is using data over NAS. In response to receiving the indicator in the RRC connection request message, the eNodeB can configure its SRB1 with the PDCP-TM.

In the present technology, the RRC connection setup complete message can include a logical channel identifier (ID) that indicates whether the PDCP-TM is applied for the SRB1. In current systems, the SRB1 uses logical channel ID 1 (i.e., when the SRB1 is configured for a non-transparent mode). Therefore, an alternative logical channel ID can be defined to indicate when the SRB1 is configured with the PDCP-TM. When the UE incudes this alternative logical channel ID in the RRC connection setup complete message, the eNodeB can determine how to process a PDCP PDU received in the RRC connection setup complete message based on the alternative logical channel ID. In other words, the RRC connection setup complete message can include the alternative logical channel ID, and based on this alternative logical channel ID, the eNodeB can determine how to process or decode the RRC connection setup complete message.

Alternatively, rather than the SRB1 using the PDCP-TM, a new SRB can be defined that uses the PDCP-TM to carry the RRC connection setup complete message. For example, the new SRB can be referred to as SRB1bis or SRB3. In other words, the SRB1bis or SRB3 can use the PDCP-TM to carry the RRC connection setup complete message, and the SRB1bis or SRB3 can be applicable to NB-IoT. In addition, any RRC message that is sent after the RRC connection setup complete message can use the PDCP-TM (while AS security is not established).

In one configuration, SRBs can be defined as radio bearers that are used for the transmission of RRC and NAS messages. For NB-IoT, SRB1bis can be for RRC messages (which may include a piggybacked NAS message), as well as for NAS messages prior to an activation of security. In NB-IoT, during a RRC connection establishment procedure, the SRB1bis can be established implicitly with the SRB1. The SRB1bis can use a defined logical channel identity (ID) with a same configuration as the SRB1 but with no PDCP entity. The SRB1bis can be used until security is activated. The RRC messages to activate AS security (e.g., command and successful response) can be sent over the SRB1 being integrity protected, and ciphering can be started after completion of the procedure. Once AS security is activated, new RRC messages can be transmitted using the SRB1. On the other hand, NAS security is still utilized when using PDCP TM between the UE and the MME.

In the above configuration, the eNodeB may not know the SRB1 configuration until the RRC connection setup complete message is received and processed in a MAC layer of the eNodeB. Therefore, the eNodeB can configure two separate SRBs in advance of a reception of the RRC connection setup complete message - a first SRB configured with PDCP-TM and a second SRB configured with a non-transparent PDCP. Alternatively, the eNodeB can configure the SRB appropriately when the RRC connection setup complete message is received and processed at the MAC layer of the eNodeB. The indication of PDCP-TM in the RRC connection setup complete message implicitly informs the eNodeB that the UE is using data over NAS.

One benefit of using the logical channel ID in the RRC connection setup complete message is that it avoids adding an additional bit in the RRC connection request message. Specifically, for LTE/eMTC, it is advantageous to satisfy a current size limitation of 48 bits for the RRC connection request message (and 56 bits for a MAC PDU).

In one configuration, the eNodeB may only support data over NAS. In this case, the eNodeB can directly assume that the PDCP-TM is used for the SRB1. To enable this configuration, a system information broadcast can indicate that only data over NAS is supported in a particular cell, which can ensure that UEs that support both data over NAS and data over a user plane only use the PDCP-TM when accessing this particular cell. In addition, when the eNodeB only supports data over NAS and the UE supports both data on NAS and data over the user plane, the UE can send an RRC connection setup complete message that includes a logical channel ID to indicate that the PDCP-TM is applied for the SRB1, as described earlier.

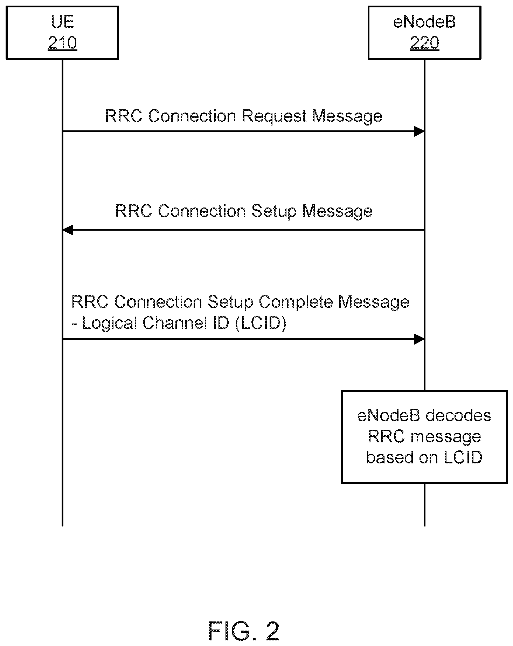

FIG. 2 illustrates exemplary signaling between a user equipment (UE) 210 and an eNodeB 220. A radio resource control (RRC) connection establishment procedure can be performed between the UE 210 and the eNodeB 220. For example, the UE can send an RRC connection request message to the eNodeB 220. In response to the RRC connection request message, the eNodeB 220 can send an RRC connection setup message to the UE 210. In response to the RRC connection setup message, the UE 210 can send an RRC connection setup complete message to the eNodeB 220. The RRC connection request message and the RRC connection setup message can include a logical channel identifier (ID) that is associated with a signaling radio bearer 0 (SRB0).

In one example, the RRC connection setup complete message can include a logical channel ID that indicates a packet data convergence protocol (PDCP) transparent mode (TM) is applied at the UE 210 for a signaling radio bearer 1 (SRB1) for the RRC connection setup complete message. In other words, the RRC connection setup complete message can be routed through a PDCP layer at the UE 210 on the SRB1, and in order to prevent the PDCP layer from adding additional overhead (e.g., a header and message authentication code) to the RRC connection setup complete message, the UE 210 can operate in the PDCP-TM. When operating in the PDCP-TM, the RRC connection setup complete message can bypass the PDCP layer at the UE 210. The PDCP layer can use the PDCP-TM when data over a control plane is used at the UE 210 (i.e., when the UE 210 transmits data to the eNodeB 220 over the control plane as opposed to a user plane). Therefore, the UE 210 can include the logical channel ID in the RRC connection setup complete message, and a value of the logical channel ID can indicate that the PDCP-TM is applied for the SRB1 for the RRC connection setup complete message.

The eNodeB 220 can receive the RRC connection setup complete message with the logical channel ID indicating that the PDCP-TM is applied for the SRB1. Based on the value of the logical channel ID, the eNodeB 220 can correctly decode the RRC connection setup complete message. In other words, if the SRB1 uses the PDCP-TM to carry the RRC connection setup complete message, but the UE 210 does not include the logical channel ID in the RRC connection setup complete message to indicate that the PDCP-TM is applied for the SRB1, then the eNodeB 220 may be unable to directly decode the RRC connection setup complete message received from the UE 210. Therefore, when the RRC connection setup complete message includes the logical channel ID indicating that the PDCP-TM is applied for the SRB1, the eNodeB 220 knows how to decode the RRC connection setup complete message. Based on the logical channel ID included in the RRC connection setup complete message, the UE 210 and the eNodeB 220 can be aligned with respect to whether the PDCP-TM is applied at the UE 210 or not applied at the UE 210.

In one configuration, rather than the SRB1 using the PDCP-TM, a new SRB can be defined that uses the PDCP-TM to carry the RRC connection setup complete message. For example, the new SRB can be referred to as SRB1bis or SRB3. In other words, the SRB1bis or SRB3 can use the PDCP-TM to carry the RRC connection setup complete message, and the SRB1bis or SRB3 can be applicable to NB-IoT.

In one configuration, a UE that only supports data over NAS (i.e., the control plane) may not support AS security, and hence, the UE may only support the PDCP-TM for the SRB1. A UE that supports both data over NAS and data over a user plane can be required to support AS security, and hence, the UE can support both PDCP-TM and a non-transparent PDCP. When such a UE performs an initial attach, the UE may not know whether data over NAS or data over the user plane will be selected by a NAS level negotiation between the UE and a mobility management entity (MME), and hence, the UE may not know whether AS security will be activated later in the RRC connection. In this case, the PDCP-TM may not be applied for the SRB1 when the RRC connection is established, so that an AS security activation can be performed later during the RRC connection without necessitating a modification to a current security activation procedure. In addition, the NAS negotiation of data over NAS or user plane (UP) can occur at a tracking area update (TAU). Therefore, the PDCP-TM may not be used for an RRC connection initialized for an attach or TAU.

In one example, a NB-IoT UE that only transfers data over NAS can indicate usage of the PDCP-TM for the SRB to the eNodeB. In another example, with respect to a NB-IoT UE that supports both data over NAS and data over UP and an eNodeB that supports both data over NAS and data over the UP, the PDCP-TM can be used for the SRB1 when an RRC connection is established. For example, for the purpose of transferring data over NAS. In other words, the PDCP-TM may not be used for NAS signaling (e.g., attach or TAU), and the PDCP-TM may not be used for data over the user plane.

In one configuration, a reconfiguration of the SRB1 from the PDCP-TM to a non-transparent PDCP can be supported in order to allow an activation of AS security. In the attach and TAU procedures, the UE can determine when the RRC connection is initialized that AS security is configured as a result of the attach or TAU procedure, and the UE can use the non-transparent PDCP for the SRB1. However, in some cases, the UE can establish the RRC connection for the purpose of sending data over NAS, and therefore, the UE uses the PDCP-TM for the SRB1 (in which case the AS security is not provided). During the RRC connection, the network can determine to activate AS security. For example, the network can determine to activate the AS security for sensitive RRC procedures, such as, e.g., measurement reporting, redirection positioning related procedures, etc. In this case, the eNodeB may have to reconfigure the SRB1 from the PDCP-TM to the non-transparent PDCP (or PDCP-non-TM) before the eNodeB can activate security (or potentially at the same time as activating security). In previous solutions, such a reconfiguration of the SRB1 from the PDCP-TM to the non-transparent PDCP can be a complicated process, as the consequence of the eNodeB and the UE not being synchronized with respect to a PDCP configuration of the SRB1 can be detrimental (e.g., the eNodeB and the UE may be unable to communicate with each other).

In one configuration, in order to enable such a reconfiguration of the SRB1 from the PDCP-TM to the non-transparent PDCP, two separate SRBs can be used. A first SRB can be configured with the PDCP-TM and a second SRB can be configured with the non-transparent PDCP. When AS security is not activated, either of the two SRBs can be used, and there can be no risk of the UE or the eNodeB failing to decode (or erroneously decoding) a received PDCP PDU. In other words, regarding of the SRB that is used, the UE or the eNodeB can successfully decode the received PDCP PDU. When the UE is reconfigured from the PDCP-TM to the non-transparent PDCP, then the UE can switch from an SRB using PDCP-TM (e.g., the first SRB) to an SRB that has the non-transparent PDCP (e.g., the second SRB). In one example, the first SRB using PDCP-TM can be referred to as a SRB1bis or SRB3, and the second SRB with the non-transparent PDCP can be an SRB1.

In one example, the UE can switch from the first SRB (e.g., SRB1bis/3) to the second SRB (e.g., SRB1) based on signaling from the eNodeB. For example, the UE can perform the reconfiguration from the PDCP-TM to the non-transparent PDCP based on implicit signaling from the eNodeB. More specifically, the eNodeB can send a security mode command on the SRB1 to the UE. Once an AS security is activated based on the security mode command, neither the UE nor the eNodeB can be permitted to use the first SRB (e.g., SRB1bis/3) since the first SRB would not offer security. Therefore, the transmission of the security mode command can implicitly cause the UE to switch from the first SRB for the PDCP-TM (e.g., SRB1bis/3) to the second SRB for the non-transparent PDCP (e.g., SRB1).

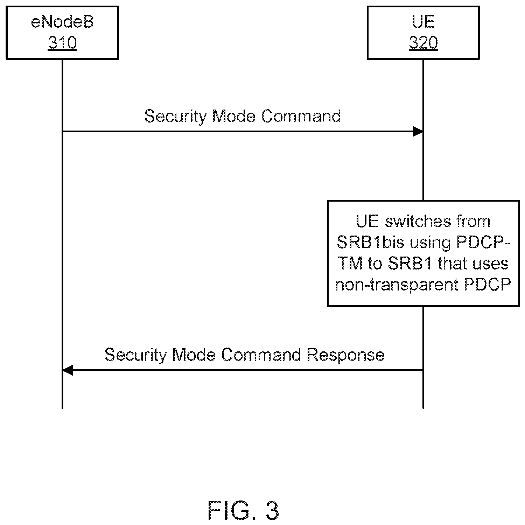

FIG 3 illustrates exemplary signaling between an eNodeB 310 and a user equipment (UE) 320 for a reconfiguration of a signaling radio bearer (SRB) from a packet data convergence protocol (PDCP) transparent mode (TM) to a non-transparent PDCP based on an establishment of access stratum (AS) security. Non-transparent PDCP can also be referred to as PDCP. The eNodeB 310 can determine to reconfigure the SRB 1 from the PDCP-TM to the non-transparent PDCP (or PDCP-non-TM) prior to activating AS security (e.g., due to sensitive RRC procedures). In order to enable a reconfiguration of the SRB from the PDCP-TM to the non-transparent PDCP, the eNodeB can configure two separate SRBs. A first SRB (e.g., SRB1bis or SRB3) can be configured with the PDCP-TM and a second SRB (SRB1) can be configured with the non-transparent PDCP.

In one configuration, when the first SRB (e.g., SRB1bis or SRB3) for the PDCP-TM is currently being used and the eNodeB 310 wishes to switch to a PDCP non-transparent mode, the eNodeB 310 can send a security mode command to the UE 320. The transmission of the security mode command can cause an AS security to be activated, and when the AS security is activity, neither the UE 320 nor the eNodeB 310 can be permitted to use the first SRB (e.g., SRB1bis/3) since the first SRB would not offer security. Therefore, the UE 320 can switch to the second SRB (e.g., SRB1) for the non-transparent PDCP. In this configuration, while the security mode command does not explicitly instruct the UE 320 to switch from the first SRB for the PDCP-TM (e.g., SRB1bis/3) to the second SRB for the non-transparent PDCP (e.g., SRB1), the security mode command can implicitly cause the reconfiguration or switching of the SRB. In addition, after the UE 320 has switched to the second SRB (e.g., SRB1), the UE 320 can send a security mode command response to the eNodeB 310 via the second SRB (e.g., SRB1).

In one configuration, a user equipment (UE) can use a defined logical channel ID to indicate that a message is transmitted from the UE using a packet data convergence protocol (PDCP) operating in a transparent mode. The UE can send the defined logical channel ID with the message to an eNodeB. In one example, when the PDCP operates in the transparent mode, the PDCP does not add a header to the message that is transmitted from the UE. In another example, the message transmitted from the UE can be a radio resource control (RRC) connection setup complete message. In yet another example, the UE can be operating in a mode in which data is sent in non-access stratum (NAS) messages. Therefore, the RRC connection setup complete message transmitted from the UE can contain a NAS message, and the NAS message can include data.

In one example, the message can be transmitted from the UE via a signaling radio bearer (SRB). An SRB with a PDCP operating in transparent mode can be referred to as a signaling bearer Ibis or 3 (SRB1bis or SRB3). In another example, the UE can use a defined logical channel ID to indicate that a message is transmitted from the UE using a PDCP operating in a non-transparent mode, and the defined logical channel IDs can be different depending on whether the PDCP is operating in the transparent mode or the non-transparent mode. In yet another example, the UE can transmit a message using the PDCP operating in the non-transparent mode when the UE is performing a NAS signaling procedure, and the NAS signaling procedure can include an attach procedure or a tracking area update (TAU).

In one configuration, the eNodeB can use a defined logical channel ID to determine that a message is received from the UE using a PDCP operating in a transparent mode. In one example, the message received at the eNodeB can be a radio resource control (RRC) connection setup complete message. The RRC connection setup complete message can contain a NAS message, and the NAS message can include data. In another example, when the PDCP operates in the transparent mode, the PDCP does not add a header to the message that is received at the eNodeB. In yet another example, the message can be received at the eNodeB via a signaling radio bearer (SRB), and an SRB with a PDCP operating in transparent mode can be referred to as a signaling bearer Ibis or 3 (SRB1bis or SRB3). In a further example, an alternative defined logical channel ID can be used to indicate a PDCP operating in a non-transparent mode.

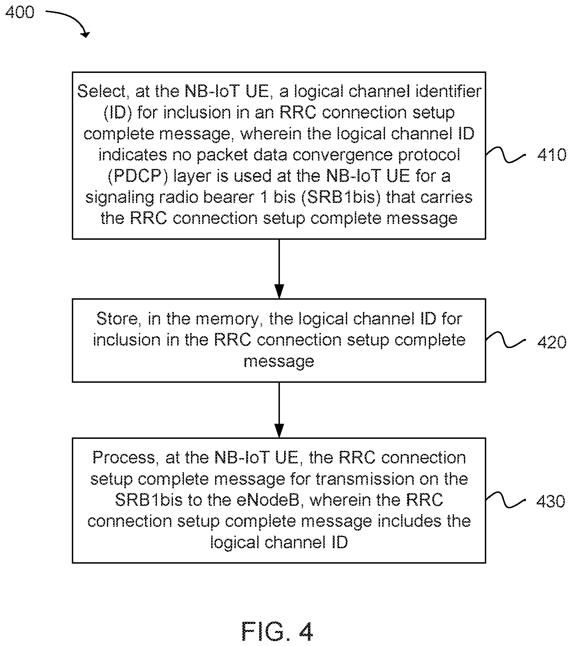

Another example provides functionality 400 of a narrowband Internet of Things (NB-IoT) user equipment (UE) operable to establish a radio resource control (RRC) connection with an eNodeB, as shown in FIG 4. The NB-IoT can comprise one or more processors and memory configured to: select, at the NB-IoT UE, a logical channel identifier (ID) for inclusion in an RRC connection setup complete message, wherein the logical channel ID indicates no packet data convergence protocol (PDCP) layer is used at the NB-IoT UE for a signaling radio bearer 1 bis (SRB1bis) that carries the RRC connection setup complete message, as in block 410. The NB-IoT can comprise one or more processors and memory configured to: store, in the memory, the logical channel ID for inclusion in the RRC connection setup complete message, as in block 420. The NB-IoT can comprise one or more processors and memory configured to: process, at the NB-IoT UE, the RRC connection setup complete message for transmission on the SRB1bis to the eNodeB, wherein the RRC connection setup complete message includes the logical channel ID, as in block 430.

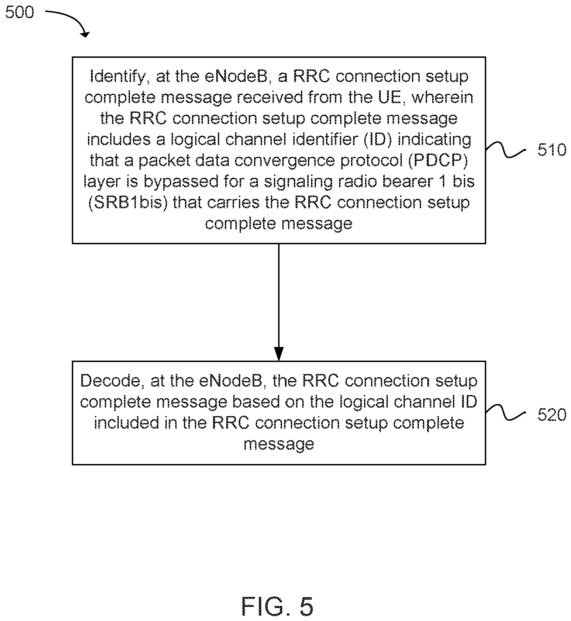

Another example provides functionality 500 of an eNodeB operable to establish a radio resource control (RRC) connection with a user equipment (UE), as shown in FIG. 5. The eNodeB can comprise one or more processors and memory configured to: identify, at the eNodeB, a RRC connection setup complete message received from the UE, wherein the RRC connection setup complete message includes a logical channel identifier (ID) indicating that a packet data convergence protocol (PDCP) layer is bypassed for a signaling radio bearer 1 bis (SRB1bis) that carries the RRC connection setup complete message, as in block 510. The eNodeB can comprise one or more processors and memory configured to: decode, at the eNodeB, the RRC connection setup complete message based on the logical channel ID included in the RRC connection setup complete message, as in block 520.

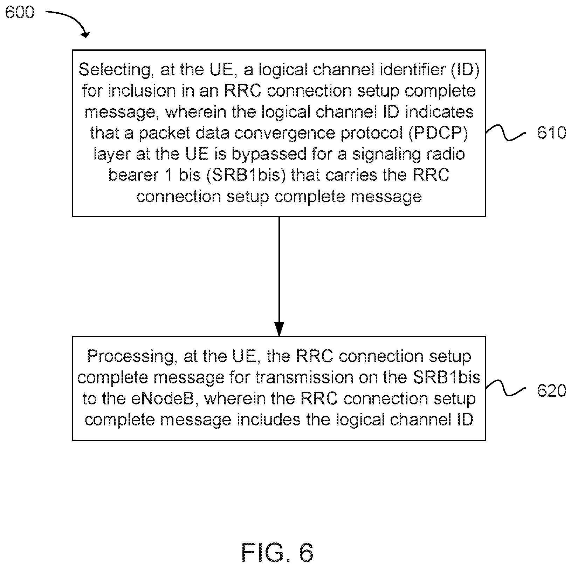

Another example provides at least one machine readable storage medium having instructions 600 embodied thereon for establishing a radio resource control (RRC) connection between a user equipment (UE) and an eNodeB, as shown in FIG 6. The instructions can be executed on a machine, where the instructions are included on at least one computer readable medium or one non-transitory machine readable storage medium. The instructions when executed perform: selecting, at the UE, a logical channel identifier (ID) for inclusion in an RRC connection setup complete message, wherein the logical channel ID indicates that a packet data convergence protocol (PDCP) layer at the UE is bypassed for a signaling radio bearer 1 bis (SRB1bis) that carries the RRC connection setup complete message, as in block 610. The instructions when executed perform: processing, at the UE, the RRC connection setup complete message for transmission on the SRB1bis to the eNodeB, wherein the RRC connection setup complete message includes the logical channel ID, as in block 620.

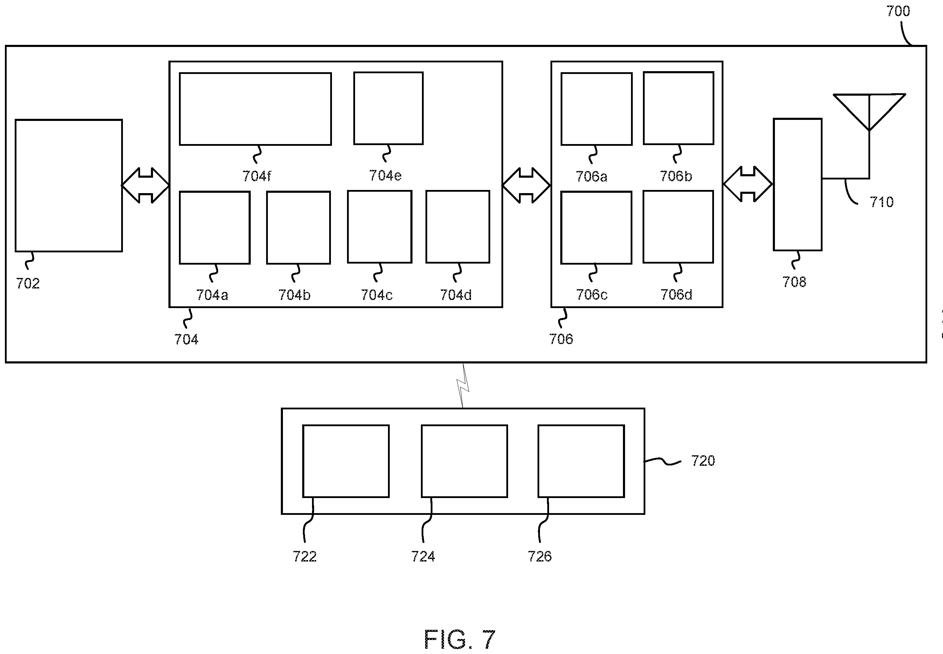

FIG 7 provides an example illustration of a user equipment (UE) device 700 and a node 720. The UE device 700 can include a wireless device, a mobile station (MS), a mobile wireless device, a mobile communication device, a tablet, a handset, or other type of wireless device. The UE device 700 can include one or more antennas configured to communicate with the node 720 or transmission station, such as a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The node 720 can include one or more processors 722, memory 724 and a transceiver 726. The UE device 700 can be configured to communicate using at least one wireless communication standard including 3GPP LTE, WiMAX, High Speed Packet Access (HSPA), Bluetooth, and WiFi. The UE device 700 can communicate using separate antennas for each wireless communication standard or shared antennas for multiple wireless communication standards. The UE device 700 can communicate in a wireless local area network (WLAN), a wireless personal area network (WPAN), and/or a WWAN

In some embodiments, the UE device 700 may include application circuitry 702, baseband circuitry 704, Radio Frequency (RF) circuitry 706, front-end module (FEM) circuitry 708 and one or more antennas 710, coupled together at least as shown. In addition, the node 720 may include, similar to that described for the UE device 700, application circuitry, baseband circuitry, Radio Frequency (RF) circuitry, front-end module (FEM) circuitry and one or more antennas

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include a storage medium, and may be configured to execute instructions stored in the storage medium to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 6G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 104f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multi-mode baseband circuitry.

The RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network. RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a necessity. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature down-conversion and/or up-conversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct down-conversion and/or direct up-conversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+l synthesizer.

In some embodiments, frequency input may be provided by a voltage controlled oscillator (VCO), although that is not a necessity. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

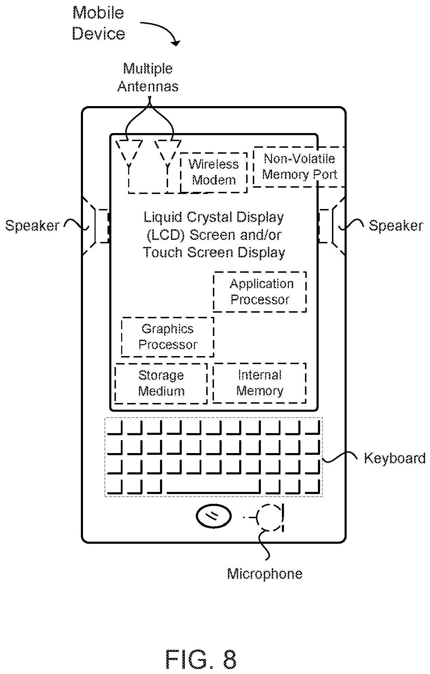

FIG. 8 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 8 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

### Examples

The following examples pertain to specific technology embodiments and point out specific features, elements, or actions that can be used or otherwise combined in achieving such embodiments.
Example 1 includes an apparatus of a narrowband Internet of Things (NB-IoT) user equipment (UE) operable to establish a radio resource control (RRC) connection with an eNodeB, the apparatus comprising: memory; and one or more processors configured to: select, at the NB-IoT UE, a logical channel identifier (ID) for inclusion in an RRC connection setup complete message, wherein the logical channel ID indicates no packet data convergence protocol (PDCP) layer is used at the NB-IoT UE for a signaling radio bearer 1 bis (SRB1bis) that carries the RRC connection setup complete message; store, in the memory, the logical channel ID for inclusion in the RRC connection setup complete message; and process, at the NB-IoT UE, the RRC connection setup complete message for transmission on the SRB1bis to the eNodeB, wherein the RRC connection setup complete message includes the logical channel ID.
Example 2 includes the apparatus of Example 1, further comprising a transceiver configured to transmit, from the NB-IoT UE, the RRC connection setup complete message that includes the logical channel ID to the eNodeB.
Example 3 includes the apparatus of any of Examples 1 to 2, wherein the one or more processors are further configured to: process, at the NB-IoT UE, a security mode command received from the eNodeB, wherein the security mode command is operable to activate a security and is received via a signaling radio bearer 1 (SRB1); and process, at the NB-IoT UE, a security mode command response for transmission to the eNodeB via the SRB1.
Example 4 includes the apparatus of any of Examples 1 to 3, wherein the SRB1bis ceases to be utilized at the NB-IoT UE when the security is activated based on the security mode command received from the eNodeB and the security mode command response transmitted to the eNodeB.
Example 5 includes the apparatus of any of Examples 1 to 4, wherein subsequent RRC messages are transmitted to the eNodeB via the SRB1 after the security is activated in response to the security mode command received from the eNodeB.
Example 6 includes the apparatus of any of Examples 1 to 5, wherein the security that is activated includes an access stratum (AS) security.
Example 7 includes the apparatus of any of Examples 1 to 6, wherein the NB-IoT UE is configured to access the eNodeB via an Evolved Universal Terrestrial Radio Access (E-UTRA) with a channel bandwidth of 180 kilohertz (kHz).
Example 8 includes an apparatus of an eNodeB operable to establish a radio resource control (RRC) connection with a user equipment (UE), the apparatus comprising: memory; and one or more processors configured to: identify, at the eNodeB, a RRC connection setup complete message received from the UE, wherein the RRC connection setup complete message includes a logical channel identifier (ID) indicating that a packet data convergence protocol (PDCP) layer is bypassed for a signaling radio bearer 1 bis (SRB1bis) that carries the RRC connection setup complete message; and decode, at the eNodeB, the RRC connection setup complete message based on the logical channel ID included in the RRC connection setup complete message.
Example 9 includes the apparatus of Example 8, further comprising a transceiver configured to receive, from the UE, the RRC connection setup complete message that includes the logical channel ID.
Example 10 includes the apparatus of any of Examples 8 to 9, wherein the one or more processors are further configured to: process, at the eNodeB, a security mode command for transmission to the UE, wherein the security mode command is to activate a security and is transmitted via a signaling radio bearer 1 (SRB1); and process, at the eNodeB, a security mode command response received from the UE via the SRB1.
Example 11 includes the apparatus of any of Examples 8 to 10, wherein subsequent RRC messages are transmitted to the UE via the SRB1 after the security is activated based on a transmission of the security mode command to the UE.
Example 12 includes the apparatus of any of Examples 8 to 11, wherein the PDCP layer that is bypassed for the SRB1bis is configured to provide access stratum (AS) security, wherein the AS security includes ciphering and integrity checking.
Example 13 includes the apparatus of any of Examples 8 to 12, wherein the PDCP layer is bypassed for the SRB1bis when data is to be carried over a control plane, and the PDCP layer is not bypassed for the SRB1bis when data is to be carried over a user plane.
Example 14 includes the apparatus of any of Examples 8 to 13, wherein the PDCP layer is bypassed for the SRB1bis irrespective of whether data is to be carried over a control plane or a user plane.
Example 15 includes at least one machine readable storage medium having instructions embodied thereon for establishing a radio resource control (RRC) connection between a user equipment (UE) and an eNodeB, the instructions when executed by one or more processors perform the following: selecting, at the UE, a logical channel identifier (ID) for inclusion in an RRC connection setup complete message, wherein the logical channel ID indicates that a packet data convergence protocol (PDCP) layer at the UE is bypassed for a signaling radio bearer 1 bis (SRB1bis) that carries the RRC connection setup complete message; and processing, at the UE, the RRC connection setup complete message for transmission on the SRB1bis to the eNodeB, wherein the RRC connection setup complete message includes the logical channel ID.
Example 16 includes the at least one machine readable storage medium of Example 15, further comprising instructions when executed by the one or more processors perform the following: processing, at the UE, a security mode command received from the eNodeB, wherein the security mode command is to activate a security and is received via a signaling radio bearer 1 (SRB1); and processing, at the UE, a security mode command response for transmission to the eNodeB via the SRB1.
Example 17 includes the at least one machine readable storage medium of any of Examples 15 to 16, wherein the SRB1bis ceases to be utilized at the UE when the security is activated based on the security mode command received from the eNodeB.
Example 18 includes the at least one machine readable storage medium of any of Examples 15 to 17, wherein subsequent RRC messages are transmitted to the eNodeB via the SRB1 after the security is activated in response to the security mode command received from the eNodeB.
Example 19 includes the at least one machine readable storage medium of any of Examples 15 to 18, wherein the PDCP layer is bypassed for the SRB1bis irrespective of whether data is to be carried over a control plane or a user plane.
Example 20 includes the at least one machine readable storage medium of any of Examples 15 to 19, wherein the UE is configured for narrowband Internet of Things (NB-IoT), wherein NB-IoT enables the UE to access the eNodeB via an Evolved Universal Terrestrial Radio Access (E-UTRA) with a channel bandwidth of 180 kilohertz (kHz).
Example 21 includes a user equipment (UE) operable to establish a radio resource control (RRC) connection with an eNodeB, the UE comprising: means for selecting a logical channel identifier (ID) for inclusion in an RRC connection setup complete message, wherein the logical channel ID indicates that a packet data convergence protocol (PDCP) layer at the UE is bypassed for a signaling radio bearer 1 bis (SRB1bis) that carries the RRC connection setup complete message; and means for processing the RRC connection setup complete message for transmission on the SRB1bis to the eNodeB, wherein the RRC connection setup complete message includes the logical channel ID.
Example 22 includes the UE of Example 21, further comprising: means for processing, at the UE, a security mode command received from the eNodeB, wherein the security mode command is to activate a security and is received via a signaling radio bearer 1 (SRB1); and means for processing, at the UE, a security mode command response for transmission to the eNodeB via the SRB1.
Example 23 includes the UE of any of Examples 21 to 22, wherein the SRB1bis ceases to be utilized at the UE when the security is activated based on the security mode command received from the eNodeB.
Example 24 includes the UE of any of Examples 21 to 23, wherein subsequent RRC messages are transmitted to the eNodeB via the SRB1 after the security is activated in response to the security mode command received from the eNodeB.
Example 25 includes the UE of any of Examples 21 to 24, wherein the PDCP layer is bypassed for the SRB1bis irrespective of whether data is to be carried over a control plane or a user plane.
Example 26 includes the UE of any of Examples 21 to 25, wherein the UE is configured for narrowband Internet of Things (NB-IoT), wherein NB-IoT enables the UE to access the eNodeB via an Evolved Universal Terrestrial Radio Access (E-UTRA) with a channel bandwidth of 180 kilohertz (kHz).

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

While the forgoing examples are illustrative of the principles of the present technology in one or more particular applications, it will be apparent to those of ordinary skill in the art that numerous modifications in form, usage and details of implementation can be made without the exercise of inventive faculty, and without departing from the principles and concepts of the technology. Accordingly, it is not intended that the technology be limited, except as by the claims set forth below.

## Claims

1. An apparatus of a narrowband Internet of Things, NB-IoT, user equipment, UE (210, 320), operable to establish a radio resource control, RRC, connection with an eNodeB (220, 310), the apparatus comprising:
memory; and one or more processors configured to:
select, at the NB-IoT UE (210, 320), a logical channel identifier, ID, for inclusion in an RRC connection setup complete message, wherein the logical channel ID indicates no packet data convergence protocol, PDCP, layer is used at the NB-IoT UE (210, 320) for a signaling radio bearer 1 bis, SRBibis, that carries the RRC connection setup complete message;
store, in the memory, the logical channel ID for inclusion in the RRC connection setup complete message; and
process, at the NB-IoT UE (210, 320), the RRC connection setup complete message for transmission on the SRBibis to the eNodeB (220, 310),
wherein the RRC connection setup complete message includes the logical channel ID.

2. The apparatus of claim 1, further comprising a transceiver configured to transmit, from the NB-IoT UE (210, 320), the RRC connection setup complete message that includes the logical channel ID to the eNodeB (220,310).

3. The apparatus of claim 1 or 2, wherein the one or more processors are further configured to:
process, at the NB-IoT UE (210, 320), a security mode command received from the eNodeB (220, 310), wherein the security mode command is operable to activate a security and is received via a signaling radio bearer 1, SRBi; and
process, at the NB-IoT UE (210, 320), a security mode command response for transmission to the eNodeB (220, 310) via the SRB1.

4. The apparatus of claim 3, wherein the SRBibis ceases to be utilized at the NB-IoT UE (210, 320) when the security is activated based on the security mode command received from the eNodeB (220, 310) and the security mode command response transmitted to the eNodeB (220,310).

5. The apparatus of claim 3 or 4, wherein subsequent RRC messages are transmitted to the eNodeB (220, 310) via the SRB1 after the security is activated in response to the security mode command received from the eNodeB (220,310).

6. The apparatus of any of claims 3 to 5, wherein the security that is activated includes an access stratum, AS, security.

7. An apparatus of an eNodeB (220, 310) operable to establish a radio resource control, RRC, connection with a user equipment, UE (210, 320), the apparatus comprising: memory; and one or more processors configured to:
identify, at the eNodeB (220, 310), a RRC connection setup complete message received from the UE (210, 320), wherein the RRC connection setup complete message includes a logical channel identifier, ID, indicating that a packet data convergence protocol, PDCP, layer is bypassed for a signaling radio bearer 1 bis, SRBibis, that carries the RRC connection setup complete message; and
decode, at the eNodeB (220, 310), the RRC connection setup complete message based on the logical channel ID included in the RRC connection setup complete message.

8. The apparatus of claim 7, further comprising a transceiver configured to receive, from the UE (210, 320), the RRC connection setup complete message that includes the logical channel ID.

9. The apparatus of claim 7 or 8, wherein the one or more processors are further configured to:
process, at the eNodeB (220, 310), a security mode command for transmission to the UE (210, 320), wherein the security mode command is to activate a security and is transmitted via a signaling radio bearer 1, SRBi; and
process, at the eNodeB (220, 310), a security mode command response received from the UE (210, 320) via the SRB1.

10. The apparatus of claim 9, wherein subsequent RRC messages are transmitted to the UE (210, 320) via the SRB1 after the security is activated based on a transmission of the security mode command to the UE (210, 320).

11. The apparatus of claim 6, wherein the PDCP layer that is bypassed for the SRB1bis is configured to provide access stratum, AS, security, wherein the AS security includes ciphering and integrity checking, or
wherein the PDCP layer is bypassed for the SRBibis when data is to be carried over a control plane, and the PDCP layer is not bypassed for the SRB1 bis when data is to be carried over a user plane, or
wherein the PDCP layer is bypassed for the SRBibis irrespective of whether data is to be carried over a control plane or a user plane.

12. At least one machine readable storage medium having instructions embodied thereon for establishing a radio resource control, RRC, connection between a user equipment, UE (210, 320), and an eNodeB (220, 310), the instructions when executed by one or more processors perform the following:
selecting, at the UE (210, 320), a logical channel identifier, ID, for inclusion in an RRC connection setup complete message, wherein the logical channel ID indicates that a packet data convergence protocol, PDCP, layer at the UE (210, 320) is bypassed for a signaling radio bearer 1 bis, SRB1bis, that carries the RRC connection setup complete message; and
processing, at the UE (210, 320), the RRC connection setup complete message for transmission on the SRBibis to the eNodeB (220, 310),
wherein the RRC connection setup complete message includes the logical channel ID.

13. The at least one machine readable storage medium of claim 12, further comprising instructions when executed by the one or more processors perform the following:
processing, at the UE (210, 320), a security mode command received from the eNodeB (220, 310), wherein the security mode command is to activate a security and is received via a signaling radio bearer 1, SRBi; and
processing, at the UE (210, 320), a security mode command response for transmission to the eNodeB (220, 310) via the SRB1.

14. The at least one machine readable storage medium of claim 13, wherein the SRBibis ceases to be utilized at the UE (210, 320) when the security is activated based on the security mode command received from the eNodeB (220, 310).

15. The at least one machine readable storage medium of claim 13, wherein subsequent RRC messages are transmitted to the eNodeB (220, 310) via the SRB1 after the security is activated in response to the security mode command received from the eNodeB (220, 310).

## Patentansprüche

1. Gerät einer Schmalband-Internet-der-Dinge- bzw. NB-IoT-Benutzerausrüstung, UE (210, 320), funktionsfähig zum Einrichten einer Funkbetriebsmittelsteuerung- bzw. RRC-Verbindung mit einem eNodeB (220, 310), das Gerät umfassend:
Speicher; und einen oder mehrere Prozessoren, konfiguriert zum:
Auswählen, an der NB-IoT-UE (210, 320), einer logischen Kanalkennung, ID, zur Aufnahme in die RRC-Verbindungseinrichtung-Fertigstellungsnachricht, wobei die logische Kanal-ID angibt, dass keine Paketdatenkonvergenzprotokoll- bzw. PDCP-Schicht an der NB-IoT-UE (210, 320) für einen Signalisierungsfunkträger 1 bis, SRB1bis, der die RRC-Verbindungseinrichtung-Fertigstellungsnachricht trägt, verwendet wird;
Speichern, in dem Speicher, der logischen Kanal-ID zur Aufnahme in die RRC-Verbindungseinrichtung-Fertigstellungsnachricht; und
Verarbeiten, an der NB-IoT-UE (210, 320), der RRC-Verbindungseinrichtung-Fertigstellungsnachricht zur Übertragung auf dem SRB1bis an den eNodeB (220, 310),
wobei die RRC-Verbindungseinrichtung-Fertigstellungsnachricht die logische Kanal-ID enthält.

2. Gerät nach Anspruch 1, ferner umfassend einen Sender/Empfänger, konfiguriert zum Übertragen, von der NB-IoT-UE (210, 320), der RRC-Verbindungseinrichtung-Fertigstellungsnachricht, die die logische Kanal-ID enthält, an den eNodeB (220, 310).

3. Gerät nach Anspruch 1 oder 2, wobei der eine oder die mehreren Prozessor ferner konfiguriert sind zum:
Verarbeiten, an der NB-IoT-UE (210, 320), eines von dem eNodeB (220, 310) empfangenen Sicherheitsmodus-Befehls, wobei der Sicherheitsmodus-Befehl funktionsfähig ist zum Aktivieren einer Sicherheit und über einen Signalisierungsfunkträger 1, SRB1, empfangen wird; und
Verarbeiten, an der NB-IoT-UE (210, 320), einer Sicherheitsmodus-Befehlsantwort zur Übertragung an den eNodeB (220, 310) über den SRB1.

4. Gerät nach Anspruch 3, wobei der SRB1bis an der NB-IoT-UE (210, 320) nicht mehr genutzt wird, wenn die Sicherheit basierend auf dem von dem eNodeB (220, 310) empfangenen Sicherheitsmodus-Befehl und der an den eNodeB (220, 310) übertragenen Sicherheitsmodus-Befehlsantwort aktiviert wird.

5. Gerät nach Anspruch 3 oder 4, wobei anschließende RRC-Nachrichten über den SRB1 an den eNodeB (220, 310) übertragen werden, nachdem die Sicherheit als Reaktion auf den von dem eNodeB (220, 310) empfangenen Sicherheitsmodus-Befehl aktiviert wird.

6. Gerät nach einem der Ansprüche 3 bis 5, wobei die Sicherheit, die aktiviert wird, eine Access-Stratum- bzw. AS-Sicherheit enthält.

7. Gerät eines eNodeB (220, 310), funktionsfähig zum Einrichten einer Funkbetriebsmittelsteuerung- bzw. RRC-Verbindung mit einer Benutzerausrüstung, UE (210, 320), das Gerät umfassend: Speicher; und einen oder mehrere Prozessoren, konfiguriert zum:
Identifizieren, an dem eNodeB (220, 310), einer von der UE (210, 320) empfangenen RRC-Verbindungseinrichtung-Fertigstellungsnachricht, wobei die RRC-Verbindungseinrichtung-Fertigstellungsnachricht eine logische Kanalkennung, ID, enthält, die angibt, dass eine Paketdatenkonvergenzprotokoll- bzw. PDCP-Schicht für einen Signalisierungsfunkträger 1 bis, SRB1bis, der die RRC-Verbindungseinrichtung-Fertigstellungsnachricht trägt, umgangen wird, und
Decodieren, an dem eNodeB (220, 310), der RRC-Verbindungseinrichtung-Fertigstellungsnachricht basierend auf der in der RRC-Verbindungseinrichtung-Fertigstellungsnachricht enthaltenen logischen Kanal-ID.

8. Gerät nach Anspruch 7, ferner umfassend einen Sender/Empfänger, konfiguriert zum Empfangen, von der UE (210, 320), der RRC-Verbindungseinrichtung-Fertigstellungsnachricht, die die logische Kanal-ID enthält.

9. Gerät nach Anspruch 7 oder 8, wobei der eine oder die mehreren Prozessoren ferner konfiguriert sind zum:
Verarbeiten, an dem eNodeB (220, 310), eines Sicherheitsmodus-Befehls zur Übertragung an die UE (210, 320), wobei der Sicherheitsmodus-Befehl zum Aktivieren einer Sicherheit dient und über einen Signalisierungsfunkträger 1, SRB1, übertragen wird; und
Verarbeiten, an dem eNodeB (220, 310), einer von der UE (210, 320) über den SRB1 empfangenen Sicherheitsmodus-Befehlsantwort.

10. Gerät nach Anspruch 9, wobei anschließende RRC-Nachrichten über den SRB1 an die UE (210, 320) übertragen werden, nachdem die Sicherheit basierend auf einer Übertragung des Sicherheitsmodus-Befehls an die UE (210, 320) aktiviert wird.

11. Gerät nach Anspruch 6, wobei die PDCP-Schicht, die für den SRB1bis umgangen wird, konfiguriert ist zum Bereitstellen von Access-Stratum- bzw. AS-Sicherheit, wobei die AS-Sicherheit Chiffrierung und Integritätsprüfung enthält, oder
wobei die PDCP-Schicht für den SRB1bis umgangen wird, wenn Daten über eine Steuerebene zu tragen sind, und die PDCP-Schicht für den SRB1bis nicht umgangen wird, wenn Daten über eine Benutzerebene zu tragen sind, oder
wobei die PDCP-Schicht für den SRB1bis unabhängig davon, ob Daten über eine Steuerebene oder eine Benutzerebene zu tragen sind, umgangen wird.

12. Mindestens ein maschinenlesbares Speichermedium mit darin verkörperten Anweisungen zum Einrichten einer Funkbetriebsmittelsteuerung- bzw. RRC-Verbindung zwischen einer Benutzerausrüstung, UE (210, 320), und einem eNodeB (220, 310), wobei die Anweisungen, wenn sie durch einen oder mehrere Prozessoren ausgeführt werden, Folgendes durchführen:
Auswählen, an der UE (210, 320), einer logischen Kanalkennung, ID, zur Aufnahme in die RRC-Verbindungseinrichtung-Fertigstellungsnachricht, wobei die logische Kanal-ID angibt, dass eine Paketdatenkonvergenzprotokoll- bzw. PDCP-Schicht an der UE (210, 320) für einen Signalisierungsfunkträger 1 bis, SRB1bis, der die RRC-Verbindungseinrichtung-Fertigstellungsnachricht trägt, umgangen wird; und
Verarbeiten, an der UE (210, 320), der RRC-Verbindungseinrichtung-Fertigstellungsnachricht zur Übertragung auf dem SRB1bis an den eNodeB (220, 310),
wobei die RRC-Verbindungseinrichtung-Fertigstellungsnachricht die logische Kanal-ID enthält.

13. Mindestens ein maschinenlesbares Speichermedium nach Anspruch 12, ferner umfassend Anweisungen, die, wenn sie durch den einen oder die mehreren Prozessoren ausgeführt werden, Folgendes durchführen:
Verarbeiten, an der UE (210, 320), eines von dem eNodeB (220, 310) empfangenen Sicherheitsmodus-Befehls, wobei der Sicherheitsmodus-Befehl zum Aktivieren einer Sicherheit dient und über einen Signalisierungsfunkträger 1, SRB1, empfangen wird; und
Verarbeiten, an der UE (210, 320), einer Sicherheitsmodus-Befehlsantwort zur Übertragung an den eNodeB (220, 310) über den SRB1.

14. Mindestens ein maschinenlesbares Speichermedium nach Anspruch 13, wobei der SRB1bis an der UE (210, 320) nicht mehr genutzt wird, wenn die Sicherheit basierend auf dem von dem eNodeB (220, 310) empfangenen Sicherheitsmodus-Befehl aktiviert wird.

15. Mindestens ein maschinenlesbares Speichermedium nach Anspruch 13, wobei anschließende RRC-Nachrichten über den SRB1 an den eNodeB (220, 310) übertragen werden, nachdem die Sicherheit als Reaktion auf den von dem eNodeB (220, 310) empfangenen Sicherheitsmodus-Befehl aktiviert wird.

## Revendications

1. Appareil d'un équipement utilisateur, UE, d'Internet des objets à bande étroite NB-IoT, (210, 320), exploitable pour établir une connexion de commande de ressources radio, RRC, avec un eNodeB (220, 310), l'appareil comprenant : une mémoire ; et un ou plusieurs processeurs configurés pour :
sélectionner, au niveau de l'UE NB-IoT (210, 320), un identifiant, ID, de canal logique, en vue de son inclusion dans le message d'établissement de connexion RRC terminé, l'ID de canal logique indiquant qu'aucune couche de protocole de convergence de données par paquets, PDCP, n'est utilisée au niveau de l'UE NB-IoT (210, 320) pour un support radio de signalisation 1 bis, SRB1bis, qui achemine le message d'établissement de connexion RRC terminé ;
stocker, dans la mémoire, l'ID de canal logique en vue de inclusion dans le message d'établissement de connexion RRC terminé ; et
traiter, au niveau de l'UE NB-IoT (210, 320), le message d'établissement de connexion RRC terminé en vue de sa transmission sur le SRB1bis à l'eNodeB (220, 310),
dans lequel le message d'établissement de connexion RRC terminé comporte l'ID de canal logique.

2. Appareil selon la revendication 1, comprenant en outre un émetteur-récepteur configuré pour transmettre, depuis l'UE NB-IoT (210, 320), le message d'établissement de connexion RRC terminé qui comporte l'ID de canal logique à l'eNodeB (220, 310).

3. Appareil selon la revendication 1 ou 2, dans lequel les un ou plusieurs processeurs sont configurés en outre pour :
traiter, au niveau de l'UE NB-IoT (210, 320), une commande de mode de sécurité reçue depuis l'eNodeB (220, 310), la commande de mode de sécurité servant à activer une sécurité et étant reçue par l'intermédiaire d'un support radio de signalisation 1, SRB1 ; et
traiter, au niveau de l'UE NB-IoT (210, 320), une réponse de commande de mode de sécurité en vue de sa transmission à l'eNodeB (220, 310) par l'intermédiaire du SRB1.

4. Appareil selon la revendication 3, dans lequel le SRB1bis cesse d'être utilisé au niveau de l'UE NB-IoT (210,320) quand la sécurité est activée en fonction de la commande de mode de sécurité reçue depuis l'eNodeB (220, 310) et la réponse de commande de mode de sécurité est transmise à l'eNodeB (220, 310).

5. Appareil selon la revendication 3 ou 4, dans lequel des messages RRC suivants sont transmis à l'eNodeB (220, 310) par l'intermédiaire du SRB1 après l'activation de la sécurité en réponse à la commande de mode de sécurité reçue depuis l'eNodeB (220,310).

6. Appareil selon l'une quelconque des revendications 3 à 5, dans lequel la sécurité qui est activée comporte une sécurité de couche d'accès, AS.

7. Appareil d'un eNodeB (220, 310) exploitable pour établir une connexion de commande de ressources radio, RRC, avec un équipement utilisateur, UE (210, 320), l'appareil comprenant: une mémoire ; et un ou plusieurs processeurs configurés pour :
identifier, au niveau de l'eNodeB (220, 310), un message d'établissement de connexion RRC terminé reçu depuis l'UE (210, 320), le message d'établissement de connexion RRC terminé comportant un identifiant de canal logique, ID, indiquant qu'une couche de protocole de convergence de données par paquets, PDCP, est contournée pour un support radio de signalisation 1 bis, SRB1bis, qui achemine le message d'établissement de connexion RRC ; et
décoder, au niveau de l'eNodeB (220, 310), le message d'établissement de connexion RRC terminé en fonction de l'ID de canal logique inclus dans le message d'établissement de connexion RRC terminé.

8. Appareil selon la revendication 7, comprenant en outre un émetteur-récepteur configuré pour recevoir, depuis l'UE (210, 320), le message d'établissement de connexion RRC qui comporte l'ID de canal logique.

9. Appareil selon la revendication 7 or 8, dans lequel les un ou plusieurs processeurs sont configurés en outre pour :
traiter, au niveau de l'eNodeB (220, 310), une commande de mode de sécurité destinée à être transmise à l'UE (210, 320l) la commande de mode de sécurité servant à activer une sécurité et étant transmise par l'intermédiaire d'un support radio de signalisation 1, SRB1 ; et
traiter, au niveau de l'eNodeB (220, 310), une réponse de commande de mode de sécurité reçue depuis l'UE (210, 320) par l'intermédiaire du SRB1.

10. Appareil selon la revendication 9, dans lequel des messages RRC suivants sont transmis à l'UE (210, 320) par l'intermédiaire du SRB1 après l'activation de la sécurité en fonction d'une transmission de la commande de mode de sécurité à l'UE (210, 320).

11. Appareil selon la revendication 6, dans lequel la couche PDCP qui est contournée pour le SRB1bis est configurée pour fournir une sécurité de couche d'accès, AS, la sécurité AS comportant un chiffrage et une vérification d'intégrité, ou
dans lequel la couche PDCP est contournée pour le SRB1bis quand des données doivent être acheminées sur un plan de commande, et la couche PDCP n'est pas contournée pour le SRB1bis quand des données doivent être acheminées sur un plan d'utilisateur, ou
dans lequel la couche PDCP est contournée pour le SRB1bis que des données doivent être acheminées sur un plan de commande ou un plan d'utilisateur.

12. Au moins un support de mémorisation lisible par machine comportant des instructions pour établir une connexion de commande de ressources radio, RRC, entre un équipement d'utilisateur, UE (210, 320), et un eNodeB (220, 310), les instructions, à leur exécution par un ou plusieurs processeurs, mettant en œuvre :
la sélection, au niveau de l'UE (210, 320), d'un identifiant, ID, de canal logique, en vue de son inclusion dans un message d'établissement de connexion RRC terminé, dans lequel l'ID de canal logique indique qu'une couche de protocole de convergence de données par paquets, PDCP, au niveau de l'UE (210, 320) est contournée pour un support radio de signalisation bis, SRB1bis, qui achemine le message d'établissement de connexion RRC terminé ; et
le traitement, au niveau de l'UE (210, 320), du message d'établissement de connexion RRC terminé en vue de sa transmission sur le SRB1bis à l'eNodeB (220, 310),
dans lequel
le message d'établissement de connexion RRC terminé comporte l'ID de canal logique.

13. Au moins un support de mémorisation lisible par machine selon la revendication 12, comprenant en outre des instructions qui, à leur exécution par les un ou plusieurs processeurs, mettent en œuvre :
le traitement, au niveau de l'UE (210, 320), d'une commande de mode de sécurité reçue depuis l'eNodeB (220, 310), dans lequel la commande de mode de sécurité sert à activer une sécurité et est reçue par l'intermédiaire support radio de signalisation 1, SRB1 ; et
le traitement, au niveau de l'UE (210, 320), d'une réponse de commande de mode de sécurité en vue de sa transmission à l'eNodeB (220, 310) par l'intermédiaire du SRB1.

14. Au moins un support de mémorisation lisible par machine selon la revendication 13, dans lequel le SRB1bis cesse d'être utilisé au niveau de l'UE (210, 320) quand la sécurité est activée en fonction de la commande de mode de sécurité reçue depuis l'eNodeB (220, 310).

15. Au moins un support de mémorisation lisible par machine selon la revendication 13, dans lequel des messages RRC suivants sont transmis à l'eNodeB (220, 310) par l'intermédiaire du SRB1 après l'activation de la sécurité en réponse à la commande de mode de sécurité reçue depuis l'eNodeB (220, 310).
